(19) **Europäisches Patentamt**
**European Patent Office**
**Office européen des brevets**

(11) **EP 1 985 478 B1**

(12) **EUROPEAN PATENT SPECIFICATION**

(45) Date of publication and mention
of the grant of the patent:
**20.06.2012 Bulletin 2012/25**

(51) Int Cl.:
***B60G 17/016*** *(2006.01)* ***B60G 17/018*** *(2006.01)*

(21) Application number: **08154952.9**

(22) Date of filing: **22.04.2008**

(54) **Integrated vehicle body attitude control apparatus**

Integrierte Vorrichtung zur Steuerung der Ausrichtung einer Fahrzeugkarosserie

Appareil intégré de contrôle du comportement du châssis de véhicules

(84) Designated Contracting States:
**DE FR GB**

(30) Priority: **23.04.2007 JP 2007113163**

(43) Date of publication of application:
**29.10.2008 Bulletin 2008/44**

(73) Proprietor: **Aisin Seiki Kabushiki Kaisha**
**Kariya-shi, Aichi 448-8650 (JP)**

(72) Inventors:
• **Hidaka, Seiji**
**c/o AISIN SEIKI KABUSHIKI KAISHA**
**Kariya-shi Aichi 448-8650 (JP)**

• **Tanaka, Wataru**
**c/o AISIN SEIKI KABUSHIKI KAISHA**
**Kariya-shi Aichi 448-8650 (JP)**

(74) Representative: **TBK**
**Bavariaring 4-6**
**80336 München (DE)**

(56) References cited:
**EP-A- 0 992 373         DE-A1-102004 055 177**
**FR-A- 2 888 781         JP-A- 7 032 837**
**JP-A- 8 207 542         JP-A- 61 166 714**
**JP-A- 2001 001 736      JP-A- 2006 256 368**
**JP-A- 2007 030 574      US-A- 5 500 798**
**US-A1- 2003 045 978     US-A1- 2006 074 533**
**US-A1- 2007 088 475**

**Description**

FIELD OF THE INVENTION

The present invention relates to an integrated vehicle body attitude control apparatus for a vehicle.

BACKGROUND

Generally, a damping force control apparatus controls damping force of a shock absorbing means provided at each wheel so as to control pitch movement and heave movement of a vehicle body. On the other hand, a stabilizer control apparatus controls torsional force of a stabilizer provided between right and left wheels so as to control roll movement of the vehicle body. JF2001-1736A discloses a damping force control apparatus which restrains pitch movement and roll movement of the vehicle body without impairing control performance for restraining vertical vibration of the vehicle body further to achieving functions of general damping force control apparatus.

Particularly, according to the construction described in JP2001-1736A, a first target damping force for restraining vibrations in the heave direction of the vehicle body is calculated on the basis of a single wheel model of the vehicle applying the skyhook theory for each wheel, a second target damping force for restraining vibrations in the pitch direction of the vehicle body is calculated on the basis of front-rear wheels model of the vehicle for each wheel, and a third target damping force for restraining vibrations in the roll direction of the vehicle is calculated on the basis of right-left wheels model of the vehicle for each wheel. One of the first to third target damping forces having the greatest absolute value is selected for each wheel, and damping force of a damper positioned at each wheel is set at the selected target damping force.

JP2006-347406A discloses a stabilizer system for a vehicle which appropriately exercises roll restraining performance of the vehicle body. The known stabilizer system includes a reference relative rotational position determining portion at the start of control which appropriately determines a reference relative rotational position which serves as a reference for relative rotational amount of a pair of stabilizer bar members when roll restraining control is performed. In those circumstances, the roll restraining control starts to perform when lateral acceleration calculated for control exceeds a predetermined value. A relative rotational position of pair of the stabilizer bar members when the lateral acceleration calculated for control exceeds the predetermined value is determined as the reference relative rotational position according to the construction described in JP2006-347406A.

Although the damping force control apparatus described in JP2001-1736A is configured to restrain the roll movement likewise the stabilizer system for the vehicle according to JP2006-347406A not just restraining the pitch movement, the roll movement is retrained based on damping force control of the damper positioned at each of the wheels. In those circumstances, if a vehicle includes the damping force control apparatus described in JP2001-1736A and the stabilizer system for the vehicle described in JP2006-347406A, the roll movement restraining force generated at the damping force control apparatus and the stabilizer system may be redundant, and the force generated at each of the stabilizer system for the vehicle and the damping force control apparatus is not effectively used. Namely, pitch movement restraining force and heave movement restrain force may be lacking according to the construction in which the stabilizer system for the vehicle and the damping force control apparatus are simply gathered. This is because responses come to be redundant during the processes in order to solve separate issues by the stabilizer system for the vehicle and the damping force control apparatus respectively. The known system and apparatus described in JP2001-1736A and JP2006-347406A do not refer to the needs for applying the retraining force by the stabilizer system and the damping force control apparatus while comparing the restraining forces thereof to control each wheel.

US-A-2003/0045978 discloses a control system for a plurality of motor vehicle chassis subsystems (including a suspension system) which comprises a reference model, a state estimator, a feedforward controller, and a feedback controller. The reference model computes desired states of the chassis subsystems. The state estimator estimates actual states of the vehicle. The feedforward controller computes a control value based on input from the reference model, and the feedback controller computes a control value by comparing the estimates of actual states with the desired states.

DE-A-10 2004 055 177 discloses a vehicle body attitude control apparatus, comprising: a shock absorber control means for controlling damping force of a shock absorber provided at each wheel of a vehicle; a stabilizer control means controlling a torsional force of a stabilizer adapted to be arranged between wheels at right and left of the vehicle; a detecting means detecting a vehicle state including a vehicle speed and a steering state; a first calculating means calculating a roll component when performing feed-forward control; a second calculating means a roll component when performing feedback control on the basis of a difference between the vehicle state detected by the detecting means and a desired value calculated by a vehicle body control model calculation means; a distribution control means combining the roll components calculated by the first calculating means and the second calculating means for controlling damping force by the shock absorber control means and the torsional force by the stabilizer control means; and an actuation control means controlling actuation of the shock absorber and the stabilizer in response to a distribution result by the distribution control means.

US-A-2007/0088475 discloses a method to control damping of a vehicle body using a plurality of controllable suspension dampers, comprising: determining vehicle forward velocity; monitoring input from a modal sensing system; determining parameters for heave, pitch, and roll, based upon the input from the modal sensing system; determining a common damping rate for the controllable suspension dampers based upon the vehicle forward velocity and the determined parameters for heave, pitch, and roll; and, controlling operation of each of the controllable suspension dampers based upon the common damping rate adjusted based upon a location of each of the controllable suspension dampers.

JP-A-07032837 discloses a suspension system comprising a damper on the wheel of which the damping force is variable. According to the output signals from a first vertical acceleration sensor provided at a substantially central position of a substantially frontward position of the vehicle, a second vertical acceleration sensor provided at a substantially central position of a substantially rearward position of the vehicle, and a steering angle sensor for detecting the steering angle of the vehicle, the suspension system performing the control of preventing bounce and pitch movements of the vehicle by feedback control, according to the output signals from the two vertical acceleration sensors, and performing the vehicle-turning control by feedforward control according to the steering angle signals.

US-A-5 500 798 discloses a hydraulic active suspension for suspending a vehicle body on a plurality of vehicle wheels. Actuators act between each vehicle wheels and a corresponding portion of the vehicle exert a suspension force therebetween and are controlled to increase or decrease the suspension force according to a feedback control amount calculated so that the height of a corresponding portion of the vehicle body approaches a target value. A feedforward control amount is calculated to counteract a vertical force component of a side force applied to the vehicle body due to an acceleration, braking, and/or turning of the vehicle. Finally, a compensation amount is calculated to compensate for a vertical component of a force acting between each vehicle wheel and the ground surface due to acceleration, braking and/or turning of the vehicle, this vertical component being generated based on the structure of a suspension link mechanism.

In this technical field, basically, the damping force control apparatus and the stabilizer control apparatus are separately controlled, and the damping force control apparatus and the stabilizer control apparatus are combined at most to cover a part of operation each other, there has been no idea disclosed to integrally control the damping force control apparatus and the stabilizer control apparatus. Accordingly, separate control models, for example, a control model for a damper and a control model for a stabilizer are individually provided in the stabilizer system and the damping force control apparatus, respectively, and adaptation operation for the individual control models is extremely complex. Further, considering the physical responsiveness of generating force of the stabilizer, it is most difficult to restrain the roll movement within a frequency domain which is equal to or greater than a resonance frequency of a sprung vehicle body.

A need thus exists for an integrated vehicle body attitude control apparatus which controls damping force of a shock absorbing means provided at each wheel and controls torsional force of a stabilizer provided between right and left wheels, wherein a single integrated vehicle body control model is set to a vehicle body attitude to appropriately control pitch component, heave component, and roll component of the vehicle body attitude and thus ensuring comfortable ride.

SUMMARY OF THE INVENTION

In light of the foregoing, the present invention provides an integrated vehicle body attitude control apparatus, which includes a shock absorber control means for controlling damping force of a shock absorber adapted to be provided at each wheel of a vehicle, a stabilizer control means controlling a torsional force of a stabilizer adapted to be arranged between wheels at right and left of the vehicle, a detecting means detecting a vehicle state including a vehicle speed and a steering state, an integrated vehicle body control model calculation means setting a model rotation axis of a vehicle body based on at least the vehicle speed and the steering state among detected results by the detecting means as well as a specification of the vehicle among detected results by the detecting means and calculating an integrated vehicle body control model including a model value having the model rotation axis as a center, a first calculating means calculating a pitch component, a heave component and a roll component when performing feed-forward control on the basis of the integrated vehicle body control model calculated by the integrated vehicle body control model calculation means, a second calculating means calculating a pitch component, a heave component and a roll component when performing feedback control on the basis of a difference between the vehicle state detected by the detecting means and the model value calculated by the integrated vehicle body control model calculation means, a distribution control means combining the pitch components, the heave components and the roll components calculated by the first calculating means and the second calculating means, distributing a combined resultant of the pitch components and the heave components for controlling damping force by the shock absorber control means and distributing a combined resultant of the roll components for controlling the torsional force by the stabilizer control means, and an actuation control means controlling actuation of the shock absorber and the stabilizer in response to a distribution result by the distribution control means.

According to the present invention, the pitch components, the heave components and the heave components calculated by the first calculating means and second calculating means are combined, and the combined resultant of the pitch component and the heave component are distributed to control the damping force by the shock absorber control means, and the combined resultant of the roll component is distributed to control the torsional force by the stabilizer control means so that the shock absorber and the stabilizer are actuated and controlled in response to the distribution result. Accordingly, the pitch component, the heave component and the roll component of the vehicle body attitude are appropriately controlled. Consequently, the vehicle body attitude control (vehicle body behavior control) with high robust performance is achieved in response to disturbances such as a rut, bump and crosswind, or the like, and changes of vehicle characteristics, for example, by deterioration of a tire and/or changes of payload. Thus, comfortable ride is ensured.

According to the present invention, the integrated vehicle body attitude control apparatus further includes a human sensitivity function calculating means determining a value dividing a difference between the vehicle state detected by the detecting means and the model value calculated by the integrated vehicle body control model calculation means by an absolute value of the model value as a human sensitivity function. The second calculating means calculates the pitch component, the heave component and the roll component when performing the feedback control on the basis of a calculation result by the human sensitivity function calculating means.

According to the present invention, because the pitch component, the heave component and the roll component when performing the feedback control are calculated on the basis of the calculation result by the human sensitivity function calculating means provided on the integrated vehicle body attitude control apparatus, smooth feedback control is performed.

According to the present invention, the detecting means estimating the vehicle state when a rear wheel of the vehicle passes the subject portion on a road surface on the basis of the vehicle state when a front wheel of the vehicle passes the subject portion on the road surface. The second calculating means calculates the pitch component, the heave component and the roll component when performing the feedback control on the basis of a difference between the estimated result and the model value.

According to the present invention, because the pitch component, the heave component and the roll component when performing the feedback control are calculated based on the difference between the model value and the estimation result of the vehicle state when the rear wheel of the vehicle passes the subject road surface on the basis of the vehicle state when the front wheel of the vehicle passes the subject road surface, the preview control for controlling the stabilizer in advance by estimating (presuming) disturbance component when the rear wheel passes the subject road surface based on the disturbance component that the front wheel receive from the subject road surface when the front wheel passes there, Accordingly, the roll movement caused by the disturbance component within higher frequency region is appropriately restrained.

According to the present invention, when the combined resultant of the roll component exceeds a roll component which is applicable to a control of torsional force by the stabilizer control means, the distribution control means distributes the excessive roll component to control damping force by the shock absorber control means.

According to the present invention, by structuring the distribution control means as foregoing manner, the torsional force of the stabilizer is effectively applied for controlling the shock absorber, and the pitch component, the heave component and the roll component of the vehicle body attitude is further appropriately controlled.

According to the present invention, the distribution control means compares damping forces of the shock absorbers adapted to be provided at wheels diagonally arranged from each other of the vehicle, and distributes the heave component in response to the result of comparison.

According to the present invention, by distributing the heave component in response to the comparison results of the damping forces at the shock absorbers respectively provided at wheels diagonally arranged from each other on the vehicle, changes of the vehicle body attitude caused by the maximally generative damping force differences between the diagonally arranged shock absorbers.

BRIEF DESCRIPTION OF THE DRAWINGS

The foregoing and additional features and characteristics of the present invention will become more apparent from the following detailed description considered with reference to the accompanying drawings, wherein:

Fig. 1 is a block diagram showing an integrated vehicle body attitude control apparatus according to a first embodiment of the present invention.

Fig. 2 is a plan view of a vehicle including the integrated vehicle body attitude control apparatus according to the first embodiment of the present invention.

Fig. 3 is a flowchart showing an integrated vehicle body attitude control for the integrated vehicle body attitude control apparatus according to the first embodiment of the present invention.

Fig. 4 is a flowchart showing a setting of an integrated vehicle body control model for the integrated vehicle body attitude control apparatus according to the first embodiment of the present invention.

Fig. 5 is an explanatory view showing force generated at tires of front and rear wheels according to the first embodiment of the present invention.

Fig. 6 is an explanatory view showing a turning rotation angle about vehicle body rotation center according to the first embodiment of the present invention.

Fig. 7 is an explanatory view showing displacement of each wheel in a Z-duection according to the first embodiment of the present invention.

Fig. 8 is an explanatory view showing relationship between roll angle, pitch angle and heave amount according to the first embodiment of the present invention.

Fig. 9 is a plan view for a vehicle including a damping force control means according to a second embodiment of the present invention.

Fig. 10 is a block diagram showing the damping force control means according to the second embodiment of the present invention.

Fig. 11 is a flowchart showing a damping force control by the damping force control means according to the second embodiment of the present invention.

Fig. 12 is a flowchart showing processing of a heave retraining amount limitation for the damping force control according to the second embodiment of the present invention.


DETAILED DESCRIPTION

Embodiments of the present invention will be explained with reference to illustrations of drawing figures as follows.

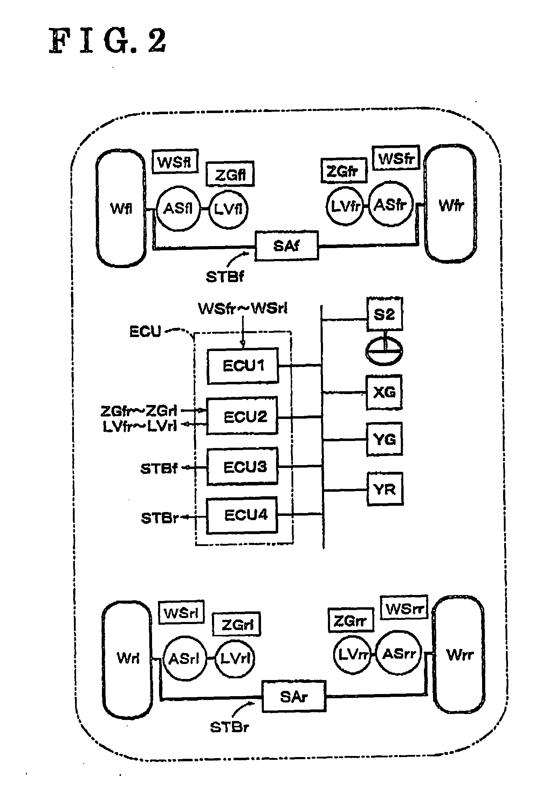

Referring to Fig. 2 showing an overview of a vehicle, an absorber $AS_{XX}$ serving as a shock absorber is provided at each wheel $W_{XX}$ (symbols $_{XX}$ indicate each wheel, particularly, "fr' indicates a front-right wheel, "fl" indicates a front-left wheel, "rr" indicates a rear-right wheel and "rl" indicates a rear-left wheel) and a vehicle body is suspended on each wheel $W_{XX}$ via the absorber $AS_{XX}$. An actuator $LV_{XX}$ for adjusting variable damping constant, or coefficient is provided at each absorber $AS_{XX}$ for each of the wheels. The actuator $LV_{XX}$ is controlled by an absorber control unit ECU 2 provided within an electronic control unit ECU (i.e, serving as an actuation control means).

The vehicle further includes a front-wheel stabilizer STBf and a rear-wheel stabilizer STBr which serve as torsional springs when roll motion is applied to the vehicle body (i.e., indicated by two-dotted chain line in Fig. 2). The front-wheel stabilizer STBf and the rear-wheel stabilizer STBr are configured to regulate torsional force for restraining vehicle body roll angle which is roll motion of the vehicle body by a stabilizer actuator (hereinafter referred to as an actuator) SAf, SAr. Each of the front wheel stabilizer STBf and the rear wheel stabilizer STBr includes a stabilizer bar which is divided into two parts to the right and left, a first end of each is connected to the wheels Wfr, Wfl respectively and a second end of each is intermittently connected to each other in the actuator SAf and the SAr. The actuators SAf and SAr share substantially identical structure. For example, each of the actuators SAf and SAr includes a rotational torque reducing mechanism and a clutch mechanism which is controlled to be intermittently connected by a stabilizer control unit ECU 3 and a stabilizer control unit ECU 4 respectively.

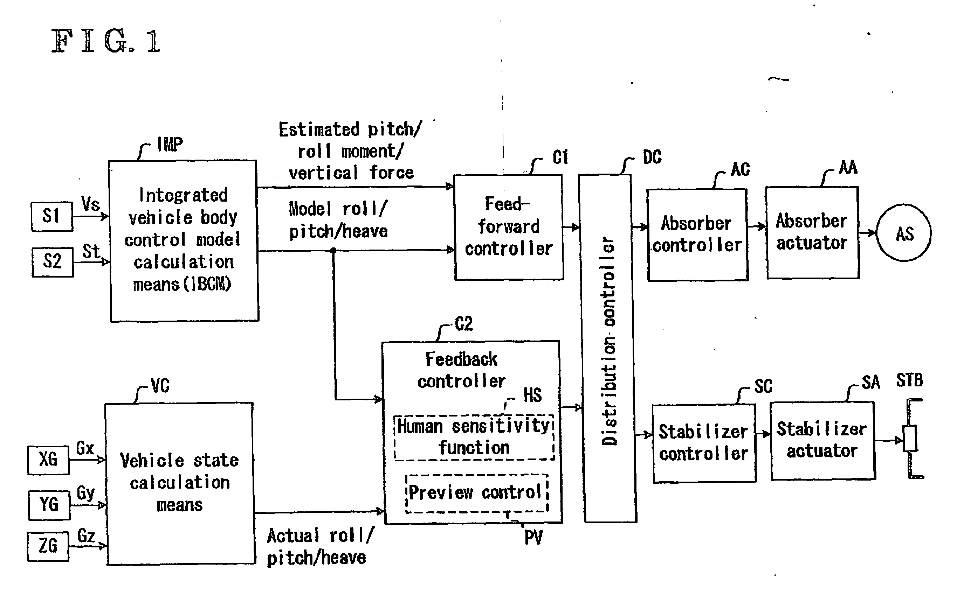

Detecting means including a steering angle sensor S2 detecting steering angle (steering wheel angle) St of a steering wheel SW, a longitudinal acceleration sensor XG detecting longitudinal acceleration Gx of the vehicle, a lateral acceleration sensor YG detecting lateral acceleration Gy of the vehicle, a yaw rate sensor YR detecting a yaw rate Yr of the vehicle is connected to a communication bus. A sprung acceleration sensor $ZG_{XX}$ detecting sprung acceleration Gz is provided at each wheel $W_{XX}$. A detection signal of the sprung acceleration sensor $ZG_{XX}$ is processed by the absorber control unit ECU 2, the actuator $LV_{XX}$ for adjusting the variable damping constant, or coefficient is controlled to regulate heave amount. Further, a wheel speed sensor $WS_{XX}$ is provided at each wheel $W_{XX}$. The wheel speed sensors $WS_{XX}$ are connected to a brake control unit ECU 1 so that rotation speed of each of the wheels, that is, pulse signal being proportional to the rotation speed of the wheel is inputted into the brake control unit ECU 1. Although a vehicle speed sensor S1 directly detecting the vehicle speed Vs is illustrated in Fig. 1, the construction may be changed so that the vehicle speed Vs is calculated on the basis of the wheel speed detected by the wheel speed sensor $WS_{XX}$ shown in Fig. 2.

The electronic control unit ECU includes the brake control unit ECU 1, the absorber control unit ECU 2, the stabilizer control units ECU 3, ECU 4, and a steering control unit. The control units ECU 1-4 and the steering control unit, or the like, are connected to a communication bus, or communication buses, via a communication unit including a CPU, ROM and RAM, or communication units. Accordingly, the information necessary for each control system can be transmitted from other control systems. For example, vehicle speed Vs calculated based on wheel speed in the brake control unit ECU 1 is supplied to the communication bus so as to be used in the absorber control unit ECU 2.

As shown in Fig. 1, an absorber controller AC and an absorber actuator AA are provided as a shock absorber control means which controls damping force of the absorber AS (including ASfr, ASfl, ASrr, ASrl) serving as the shock absorber. Further, as shown in Fig. 1, a stabilizer controller SC and a stabilizer actuator SA are provided as a stabilizer control means which control torsional force of the stabilizer STB (including STBf and STBr) between the right and left wheels of the vehicle.

As shown in Fig. 1, the vehicle speed sensor S and the steering angle sensor S2 serving as a detection means which detects vehicle speed and vehicle state including a steering state are provided. Further, as shown in Fig. 1, an integrated vehicle body control model calculation means IMP, a feed-forward controller C1 and a feedback controller C2 are provided. The integrated vehicle body control model calculation means IMP calculates an integrated vehicle body control model (i.e., Integrated Body Control Model (IBCM)) being configured to set a model rotation axis of the vehicle body (i.e., ideal rotation axis of the vehicle body) on the basis of the vehicle speed Vs detected by the vehicle speed sensor S1, the steering angle St indicating the steering state detected by the steering angle sensor S2, and specifications of the vehicle, and including a model value (i.e., ideal rotational angle of the vehicle body) about the model rotation axis. In those circumstances, a rotational angle of the model rotation axis (i.e., a gradient of the model rotation axis on coordinates) is determined on the basis of the relative ratio of the roll and the pitch. The feed-forward controller C1 (i.e., serving as a first calculation means) calculates a pitch component, a heave component and a roll component when performing a feed-forward control based on the Integrated Body Control Model (IBCM) calculated by the integrated vehicle body control model calculation means IMP. The feedback controller C2 (i.e., serving as a second calculation means) calculates a pitch component, a heave component and a roll component when performing a feedback control on the basis of a difference between a calculated result (i.e., vehicle state) by a vehicle state calculation means VC calculated based on detected results of each sensor including detected results by the aforementioned detecting means and the model value calculated by the Integrated Body Control Model (IBCM).

Still further, a distribution controller DC serving as a distribution control means is provided. According to the distribution controller DC, the pitch component, the heave component and the roll component calculated in the feed-forward controller C1 and the feedback controller C2 are combined so that the combined resultants of the pitch component and the heave component are distributed to control damping force by the absorber controller AC and the absorber actuator AA. Further, the distribution controller DC distributes the combined resultant of the roll component to control torsional force by the stabilizer controller SC and the stabilizer actuator SA. In response to the distribution results by the distribution controller DC, actuation of the absorber AS and the stabilizer STB are controlled.

Further, as indicated with dotted lines in Fig. 1, in a human sensitivity function calculating means HS, a value dividing a deviation, or difference, between a value indicating the vehicle state and the model value (i.e., model roll, pitch, heave) by the absolute value of the model value is supplied for the feedback control as a human sensitivity function. In other words, based on the human sensitivity function of the calculated result, the pitch component, the heave component and the roll component when performing the feedback control are calculated. Further, based on the vehicle state when a front wheel(s) of the vehicle passes a subject position on a road, a vehicle state when a rear wheel(s) of the vehicle passes the subject position on the road is estimated, and a pitch component, a heave component and a roll component when a feedback control (i.e., referred to as a preview control PV) is performed on the basis of a deviation, or difference, between the estimated value and the model value are calculated. The distribution controller DC is configured, when the combined resultant of the roll component exceeds a degree of the roll component which is applicable for controlling torsional force by the stabilizer actuator SA, to distribute the exceeding amount of the roll component to control damping force by the absorber actuator AA.

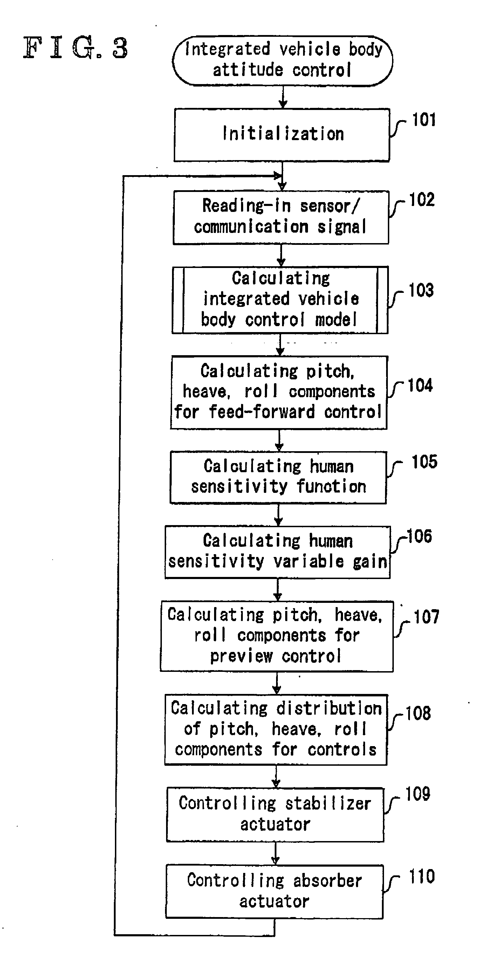

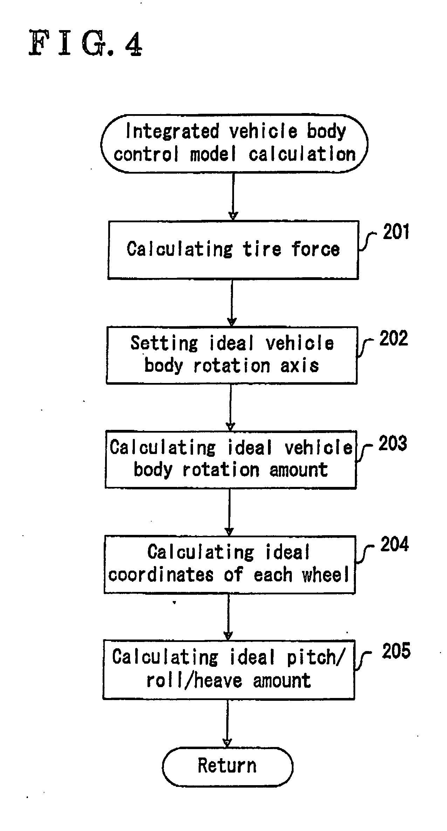

The Integrated Body Behavior Control will be explained with reference to Fig. 3 as follows. First, at Step 101, first, initialization is performed, then the process proceeds to Step 102 where sensor signal and/or communication signal including the steering angle St and the vehicle speed Vs are read-in. Next, at Step 103, the integrated vehicle body control model IBCM, as shown in Fig. 4, is calculated on the basis of the detected vehicle speed $V_S$, the detected steering angle St, and specifications of the vehicle. Subsequently, at Step 104, a pitch component, a heave component and a roll component when performing the feed-forward control based on the integrated vehicle body control model IBCM (i.e., model following feed-forward control) are calculated.

Next, the process proceeds to Step 105 where the deviation, or difference, between the value indicating the vehicle state and the model value is divided by the absolute value of the model value so that the calculated result is determined as the human sensitivity function. Thereafter, at Step 106, a human sensitivity variable gain is calculated to be applied to the feedback control. Further, at Step 107, a pitch component, a heave component and a roll component when performing the preview control are calculated.

Thereafter, the process proceeds to Step 108 where the combined resultants of the pitch component and the heave component are distributed for controlling damping force by the absorber controller AC and the absorber actuator AA, and the combined resultants of the roll component is distributed for controlling torsional force by the stabilizer controller SC and the stabilizer actuator SA. In those circumstances, when the combined resultant of the roll component exceeds the level of the roll component which is applicable for controlling the torsional force by the stabilizer actuator SA, the excessive roll component is distributed for controlling the damping force by the absorber actuator AA.

Accordingly, in accordance with the combined resultant of the roll component obtained at Step 108, the stabilizer actuator SA is controlled and the actuation of the stabilizer STB is controlled at Step 109. Subsequently, the process proceeds to Step 110 where the variable damping constant, or the coefficient, of the absorber is regulated in accordance with the pitch component and the heave component obtained at Step 108. The absorber actuator AA is controlled based on the variable damping constant, or the coefficient of the absorber so that the actuation of the absorber AS is controlled. Thus, the vehicle body attitude, or the behavior, is controlled by controlling the actuation of the actuator at Steps 109 and 110. The foregoing Steps are repeated.

The Integrated Body Control Model IBCM calculated at Step 103 determines the ideal vehicle body rotation axis based on the vehicle information by driver's inputs (e.g., steering operation, braking operation, and so on) and controls the vehicle body so as to rotate about the ideal vehicle rotation axis, which is, for example, set as shown in Fig. 4. The rotation angle (i.e., gradient) of the ideal vehicle body rotation axis is determined on the basis of the ratio of the roll and the pitch generated by the driver's inputs. First, at Step 201, tire force is calculated on the basis of the vehicle speed Vs and the steering angle St detected by the vehicle speed sensor S1 and the steering angle sensor S2 respectively and the specifications of the vehicle, and a vector of the force acting on the vehicle body's center of gravity is obtained. Next, at Step 202, a straight line arranged orthogonal to the force applied to the vehicle body is set as the ideal vehicle body rotation axis. Further, at Step 203, the ideal vehicle body rotational angle is calculated based on the angle ($\theta$), or the gradient of the vehicle body rotation axis and the degree of the force applied to the vehicle body.

Then, the process proceeds to Step 204 where the ideal vehicle state is determined on the basis of the ideal vehicle body rotation axis and the ideal vehicle body rotational angle, and the displacement at each wheel is calculated. Accordingly, at Step 205, the ideal pitch angle, the ideal roll angle and the ideal heave displacement, or n-th differentiation values of the ideal pitch angle, the ideal roll angle and the ideal heave displacement are calculated based on the ideal displacement at each of the wheels.

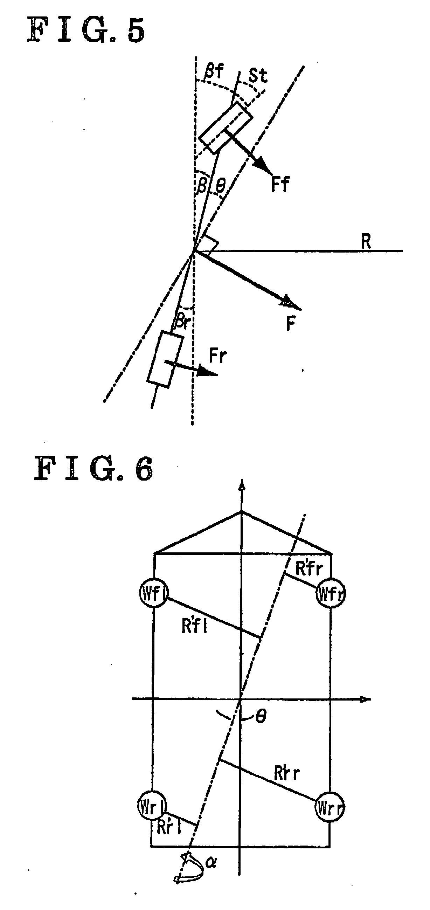

The aforementioned arithmetic proceedings will be explained with reference to Figs. 5-8. First, as shown in Fig. 5, defining a distance from the center of the gravity of the vehicle body to a front wheel as Lf, a distance from the center of the gravity of the vehicle body to a rear wheel as Lr, a wheelbase as L, a steering angle for a front wheel as St, a turning radius as R, cornering powers at the front wheel and the rear wheel as Cpf and CPr respectively, a slip angle of the vehicle as $\beta$, a slip angle of the front wheel as $\beta f$, a slip angle of the rear wheel as $\beta r$, the force Ff and Fr generated at the front wheel tire and the rear wheel tire (i.e. cornering force) respectively are expressed as follows. That is, Ff = Cpf · $\beta f$, $\beta f$=$\beta$ + St, Fr = Cpr · $\beta r$, and $\beta r$ = $\beta$. Accordingly, when the combined force of the force Ff generated at the front tire and the force Fr generated at the rear tire is defined as F, the ideal vehicle body rotation axis is defined as a line which is rotated by an angle $\theta$ relative to the vehicle body center.

As shown in Fig. 6, in a case where the rotational center of the vehicle body (i.e., representing the combination of roll and pitch) is rotated (or inclined) by the angle $\theta$ relative to the vehicle body center, provided that coordinates of wheels Wfr, Wfl, Wrr, Wrl on an x-y coordinate plane are defined as Pfr (Xfr, Yfr), Pfl (Xfl, Yfl), Prr (Xrr, Yrr), Prl (Xrl, Yrl) respectively, each of distances R'fr, R'fl, R'rr, R'rl from each wheel $W_{XX}$ to the rotational center of the vehicle body is the absolute value of a corresponding x-coordinate when the coordinate of each wheel is rotated by -$\theta$.

For example, coordinate (P'fr) of a wheel after rotating by -$\theta$ is shown as follows.

$$[\text{Formula 1}] \quad P'fr = \begin{bmatrix} X'fr \\ Y'fr \end{bmatrix} = \begin{bmatrix} \cos\theta & -\sin\theta \\ \sin\theta & \cos\theta \end{bmatrix} \cdot \begin{bmatrix} Xfr \\ Yfr \end{bmatrix} = \begin{bmatrix} \cos\theta \cdot Xfr - \sin\theta \cdot Yfr \\ \sin\theta \cdot Xfr + \cos\theta \cdot Yfr \end{bmatrix}$$

Accordingly, the distances from each of the wheels to the rotational center are defined as follows.

$$R'fr = \cos\theta \cdot Xfr - \sin\theta \cdot Yfr$$

$$R'fl = \cos\theta \cdot Xfl - \sin\theta \cdot Yfl$$

$$R'rr = \cos\theta \cdot Xrr - \sin\theta \cdot Yrr$$

$$R'rl = \cos\theta \cdot Xrl - \sin\theta \cdot Yrl$$

In those circumstances, the ideal vehicle body rotational angle $\alpha$ (i.e., turning rotational angle about the vehicle body rotation center; shown in Fig. 6) is represented as $\alpha = Gyr \cdot K_{\alpha}$. Herein, Gyr represents a model lateral acceleration (Gyr = Ff $\cdot$ cos (St)). In those circumstances, $K_{\alpha}$ is variable depending on angle $\theta$.

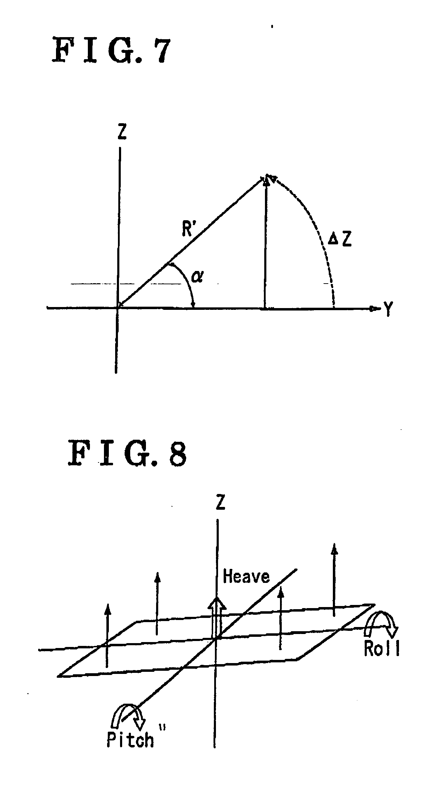

In the foregoing circumstances, the displacement of each of the wheels in a Z-direction (i.e., up-down direction, vertical direction) is shown in Fig. 7, and is expressed as follows.

$$\Delta Zfr = R'fr \cdot \sin \alpha = R'fr \cdot \alpha$$

$$\Delta Zfl = R'fl \cdot \sin \alpha = R'fl \cdot \alpha$$

$$\Delta Zrr = R'rr \cdot \sin \alpha = R'rr \cdot \alpha$$

$$\Delta Zrl = R'rl \cdot \sin \alpha = R'rl \cdot \alpha$$

Based on the displacement of each of the wheels in the Z-direction (i.e., up and down direction, vertical direction) explained above, displacements of the roll component ($\Delta Z$ roll), the pitch component ($\Delta Z$ pitch) and the heave component ($\Delta Z$ heave) are calculated as follows.

$$\Delta Z \text{ roll} = ((\Delta Zfr + \Delta Zrr) - (\Delta Zfl + \Delta Zrl)) / 2$$

$$\Delta Z \text{ pitch} = ((\Delta Zfr + \Delta Zfl) - (\Delta Zrr + \Delta Zrl)) / 2$$

$$\Delta Z \text{ heave} = (\Delta Zfr + \Delta Zfl + \Delta Zrr + \Delta Zrl) / 4$$

Further, because pitch and roll angles are minimal, roll, pitch and heave can be approximated as shown below, and those are defined as a target state amount of the vehicle. Herein, "w" represents a vehicle width and "1" represents a vehicle body length. Fig. 8 shows the relationships between the roll, pitch and heave.

$$\text{Roll} = ((\Delta Zfr + \Delta Zrr) - (\Delta Zfl + \Delta Zrl)) / 2 \cdot w$$

$$\text{Pitch} = ((\Delta Zfr + \Delta Zfl) - (\Delta Zrr + \Delta Zrl)) / 2 \cdot 1$$

$$\text{Heave} = (\Delta Zfr + \Delta Zfl + \Delta Zrr + \Delta Zrl) / 4$$

As explained above, according to the embodiment, the pitch component, the heave component and the roll component calculated by the feed-forward controller C1 and the feedback controller C2 are combined, and the combined resultant of the pitch component and the heave component are distributed to control the damping force by the absorber AS and the the combined resultant of the roll component is distributed to control the torsional force by the stabilizer STB, and the absorber actuator AA and the stabilizer actuator SA are actuated to be controlled in response to those distribution result. Thus, the pitch component, the heave component and the roll component of the vehicle attitude, or vehicle behavior are appropriately controlled. As a result, a vehicle body attitude control, or vehicle body behavior control, with high robust performance is achieved in response to disturbances such as a rut, a bump and crosswind, or the like, and changes of vehicle characteristics, for example, by deterioration of a tire and/or changes of payload.

Particularly, when the combined resultant of the roll component exceeds the roll component which is applicable to control the torsional force by the stabilizer actuator SA, the torsional force of the stabilizer STB is effectively applied to the control of the damping force by the absorber AS by distributing the excessive roll component to control the damping force by the absorber actuator AA.

Further, by distributing the heave component in response to the comparison result of the damping forces of the absorbers (e.g., ASfl and ASrr) mounted to the wheels (e.g., Wfl and Wrr) which are diagonally arranged on the vehicle, changes of the vehicle body behavior, or vehicle body attitude caused by differences of the damping forces which is able to be generated at by the absorbers ASfl and ASrr is appropriately prevented. The foregoing construction is applicable to a vehicle which does not include the stabilizer STB or a vehicle which includes another actuator as long as the damping force control of the absorber AS by the absorber actuator AA can be performed, which resolves the following drawbacks of know damping force control apparatuses.

According to known apparatuses, in a case where the generation force of each of the absorbers is determined to be the maximum value among requested values of each wheel (i.e., the maximum value amount the separately requested roll, pitch, and heave at each wheel) there is a possibility that pitch or roll movement occurs because of a front-rear difference or a right-left difference of control amount at each wheels. For example, under the condition that pitch movement and heave movement of a vehicle simultaneously occur, according to a single wheel skyhook control (i.e., controlling force in a vertical direction Z for each wheel), a heave component and a pitch component are combined, and a control target which is greater than or smaller than the heave component at the center of the gravity of the vehicle may be outputted. In those circumstances, the force which assists the pitch movement is generated because of the difference between the forces generated at front and rear wheels. Further, when the damping force which may actually be generated by the absorber does not conform to the calculated result of the target damping force by the absorber, a vehicle body attitude may be different from an expected vehicle body attitude by a deviation of the damping forces generated at each of the wheels. For example, in a case where requested damping forces for all of the wheels are in downward direction, if each of the damping forces which is able to be generated (i.e., maximally generative damping forces) at three wheels conform to each of the requested values at three wheels (i.e., downward direction) and if the damping force which is able to be generated (i.e., maximally generative damping force ) at the rest of the wheels is directed in an upward direction, the force which may occur the pitch or roll movement is generated by differences of the maximally generative damping force s at four wheels.

On the other hand, when controlling the absorber provided at each of the wheels in accordance with a maximum requested control amount for a roll component, a pitch component and a heave component, according to the known apparatuses, because control is performed for restraining greater level of the vehicle body attitude, a vehicle body attitude which a driver senses being maximum or uncomfortable and a physically maximum vehicle body attitude may not conform, and thus the vehicle body attitude sensed by the driver may not be effectively restrained. For example, when a high degree of heave movement and an intermediate degree of pitch movement simultaneously occur, a control for restraining the heave movement is performed by priority. However, depending on vehicle states, the driver may more sensitively respond to the pitch movement of the intermediate level. In those circumstances, the driver may feel more comfortable by performing a control to restrain the pitch movement.

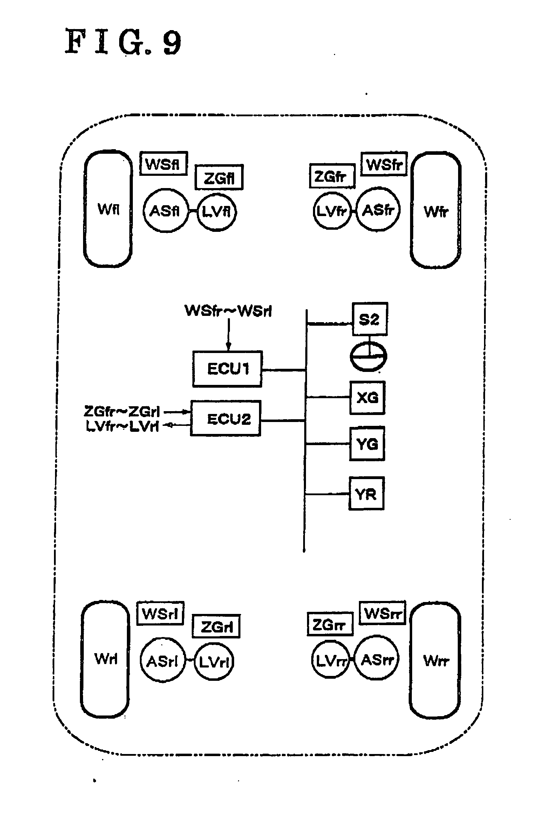

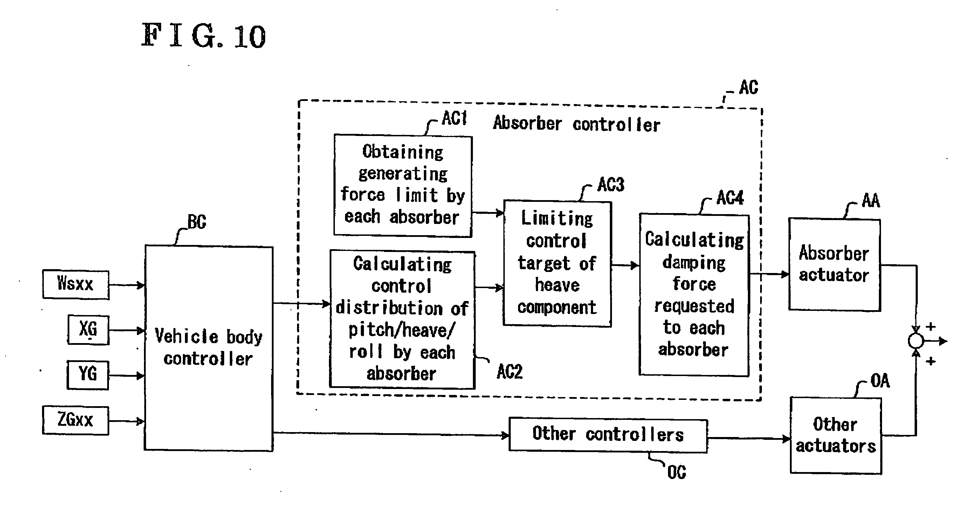

In order to resolve the foregoing drawbacks, the pitch component, the heave component and the roll component of the vehicle body attitude is appropriately controlled by the damping force control of the absorber by constructing the system as shown in Figs. 9 and 10. Particularly, by obtaining a heave component control output by comparing damping forces which can be generated by the diagonally arranged absorbers, changes in the pitch movement or the roll movement caused by the differences of the damping force which can be generated by the absorbers may be prevented. The configurations for the foregoing property will be explained as follows.

Fig. 9 shows an overview of the vehicle including the damping force control means. Although parts relating to the stabilizer as shown in Fig. 2 is not provided, other parts whose constructions are substantially identical to those shown in Fig. 2 are indicated with the same numeral, and the explanations thereof will not be repeated. Fig. 10 shows a construction of the damping force control means, On the basis of detection signals from a wheel speed sensor $WS_{XX}$, a longitudinal acceleration sensor XG, a lateral acceleration sensor YG and a sprung acceleration sensor $ZG_{XX}$, or the like, a vehicle state is determined by a vehicle body controller BC, actuation of an absorber controller AC for controlling the damping force of an absorber AS is controlled, and actuation of other controllers OC for controlling other actuators OA is controlled. The absorber controller AC is structured as explained hereinbelow.

As shown in Fig. 10, damping force which can be generated by each absorber $AS_{XX}$ (i.e., upper limit of generative force) is obtained at AC1. At AC2, a distribution rate for a control of a pitch component, a heave component and a roll component of the vehicle body attitude by each of the absorber $AS_{XX}$ is calculated. The limit of the damping force which can be generated by each of the absorbers $AS_{XX}$ and the calculated distribution rate for the control of the pitch, heave, roll components are compared at AC3 so as to limit a control target of the heave component. Based on this limitation, damping force requested to each of the absorbers $AS_{XX}$ is calculated.

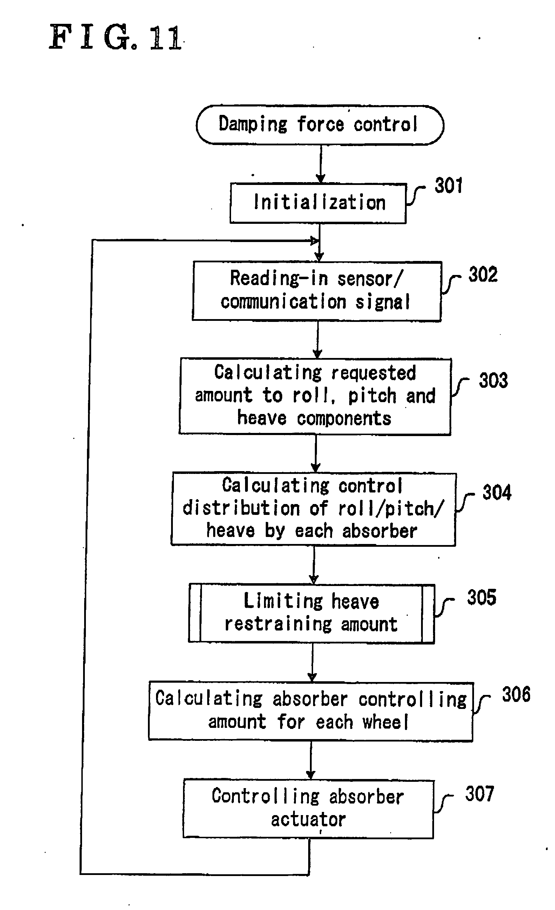

A damping force control by the absorber controller AC will be explained with reference to Fig. 11 as follows. First, initialization is executed at Step 301. Then, the processing is proceeds to Step 302 where signals from each of the sensors and communication signal are read-in. Next, at Step 303, request variables which are required to restrain the roll component, the pitch component and the heave component are calculated. Further, in Step 304, based on the request variables which are required to restrain the roll, the pitch and the heave, distribution for control of each of the absorbers $AS_{XX}$ (e.g., distribution of damping force requested to each of the absorbers $AS_{XX}$) is calculated (i.e., weighted). For example, the requested distribution amount for control of each of the absorbers $AS_{XX}$ and a variable range of controls for roll, pitch and heave by the damping force which can be outputted at the moment by each of the absorbers $AS_{XX}$ are compared, and distribution ratios (i.e., modification gains) for the roll, the pitch and the heave control are set so as to further enhance vehicle body attitude restraining effects and the set distribution ratios for the roll, the pitch and the heave control are multiplied to each of the request variables of the roll, the pitch and the heave control.

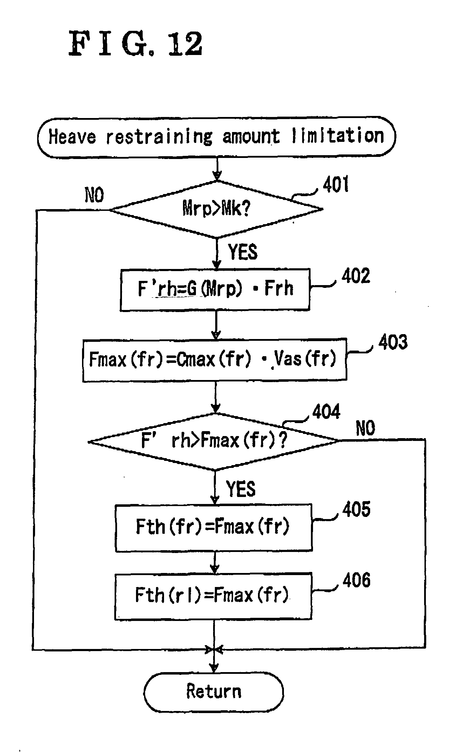

Further, at Step 305, damping force which can be generated by each of the absorbers (e.g., ASfr) is calculated, and a limitation to a heave restraining amount by the absorber (e.g., ASrl) for a wheel (e.g., Wrl) which is positioned diagonally from the absorber (ASfr) is set. That is, the requested amount of the heave component to one of the absorbers and the damping force which can be generated by another absorber which is arranged diagonally from the one of the absorbers in the current stroke state are compared. When the damping force which can be outputted from either one of absorbers specified above is lower than a requested value, the request amount of the heave component is restricted to the amount corresponding to the lower damping force output Processing for restriction of the heave component amount will be explained in details with reference to Fig. 12 hereinafter. In Step 306, each restraining amount of roll, pitch and heave is totalized to calculate absorber control amount of each wheel Based on the calculated result of the absorber control amount of each of the wheels, at Step 307, the absorber actuator AA is controlled so as to actuate the absorber AS to be controlled.

The restriction of the heave restraining amount processed in Step 305 is conducted, for example, as shown in Fig. 12. First, at Step 401, a request amount Mrp for restraining a pitch (or roll) (i.e., requested pitch (or roll) moment Mrp) and a threshold value Mk are compared. In a case where the request amount for restraining of the pitch (or roll) is determined to be greater than the threshold value Mk, the processing proceeds to Step 402 where a heave restraining request amount Frh is modified by a heave restraining gain map to be a modified heave retraining request amount F'rh. The heave restraining gain map is a map for setting a gain in accordance with the request amount Mrp for restraining the pitch (or roll) and is represented by G(Mrp) in Step 402,

Next, at Step 403, a maximally generative damping force Fmax(fr) of the absorber (e.g., absorber ASfr) of one of the wheels (e.g., wheel Wfr) (i.e., a damping force Fmax(fr) which can be generated by the absorber (e.g., absorber ASfr) of one of the wheels (e.g., wheel Wfr)) is calculated as a product of the maximum value (Cmax(fr)) of an actual cornering force of the wheel Wfr and an actual stroke speed Vas(fr) of the absorber. The damping force Fmax(fr) is compared to the modified heave retraining request amount F'rh at Step 404. When the maximally generative damping force Fmax(fr) by the absorber ASfr is less than the modified heave restraining request amount F'rh, the processing proceeds to Steps 405 and 406.

Thus, at Step 405, the maximally generative damping force Fmax(fr) of the absorber ASfr is set as the heave restraining target Fth(fr) of the wheel Wfr, and at Step 406, the heave restraining target Fth(rl) of the wheel Wrl arranged diagonally from the wheel Wfr is set at the maximally generative damping force Fmax(fr) of the absorber ASfr. In other words, the heave restraining target' Fth(r1) of the wheel Wr1 is limited to the maximally generative damping force Fmax(fr).

According to the embodiment of the present invention, the pitch components, the heave components and the heave components calculated by the feed-forward controller C1 and the feedback controller C2 are combined, and the combined resultant of the pitch component and the heave component are distributed to control the damping force by the absorber controller AC and the absorber actuator AA, and the combined resultant of the roll component is distributed to control the torsional force by the stabilizer controller SC and the stabilizer actuator SA so that the absorber AS and the stabilizer STB are actuated and controlled in response to the distribution result. Accordingly, the pitch component, the heave component and the roll component of the vehicle body attitude are appropriately controlled. Consequently, the vehicle body attitude control (vehicle body behavior control) with high robust performance is achieved in response to disturbances such as a rut, bump and crosswind, or the like, and changes of vehicle characteristics, for example, by deterioration of a tire and/or changes of payload. Thus, comfortable ride is ensured.

According to the embodiment of the present invention, the integrated vehicle body attitude control apparatus includes a human sensitivity function calculating means HS determining a value dividing a difference between the vehicle state detected by the detecting means (S1, S2, or the like) and the model value calculated by the integrated vehicle body control model calculation means IMP by the absolute value of the model value as a human sensitivity function. The feedback controller C2 calculates the pitch component, the heave component and the roll component when performing the feedback control on the basis of a calculation result by the human sensitivity function calculating means HS.

According to the embodiment of the present invention, because the pitch component, the heave component and the roll component when performing the feedback control are calculated on the basis of the calculation result by the human sensitivity function calculating means HS provided on the integrated vehicle body attitude control apparatus, smooth feedback control is performed.

According to the subject matter of the integrated vehicle body attitude control apparatus, a vehicle state when a rear wheel of the vehicle passes a subject portion on a road surface is estimated on the basis of a vehicle state when a front wheel of the vehicle passes the subject portion on the road surface. The feedback controller C2 calculates the pitch component, the heave component and the roll component when performing the feedback control on the basis of a difference between the estimated result and the model value.

Further, according to the subject matter of the integrated vehicle body attitude control apparatus, because the pitch component, tine heave component and the roll component when performing the feedback control are calculated based on the difference between the model value and the estimation result of the vehicle state when the rear wheel(s) of the vehicle passes the subject road surface on the basis of the vehicle state when the front wheel(s) of the vehicle passes the subject road surface, the preview control for controlling the stabilizer in advance by estimating (presuming) disturbance component when the rear wheel(s) passes the subject road surface based on the disturbance component that the front wheels receive from the subject road surface when the front wheels pass there. Accordingly, the roll movement caused by the disturbance component within higher frequency region is appropriately restrained.

According to the subject matter of the embodiment, when the combined resultant of the roll component exceeds a roll component which is applicable to a control for torsional force by the stabilizer controller SC and a stabilizer actuator SA, the distribution controller DC distributes the excessive roll component to control damping force by the absorber controller AC and the absorber actuator AA.

According to the subject matter of the integrated vehicle body attitude control apparatus, by structuring the distribution controller DC as foregoing manner, the torsional force of the stabilizer STB is effectively applied for controlling the absorber AS, and the pitch component, the heave component and the roll component of the vehicle body attitude is further appropriately controlled.

According to the embodiment of the present invention, the distribution controller DC compares damping forces of the absorbers $AS_{XX}$ adapted to be provided at wheels diagonally arranged from each other of the vehicle, and distributes the heave component in response to the result of comparison.

According to the subject matter of the integrated vehicle body attitude control apparatus, by distributing the heave component in response to the comparison results of the damping forces at absorbers $AS_{XX}$ respectively provided at wheels diagonally arranged from each other on the vehicle, changes of the vehicle body attitude caused by the maximally generative damping force differences between the diagonally arranged absorbers $AS_{XX}$.

**Claims**

1. An integrated vehicle body attitude control apparatus, comprising:

   a shock absorber control means (AC, AA) for controlling damping force of a shock absorber (ASfr, Asfl, ASrr, ASrl) adapted to be provided at each wheel of a vehicle;
   a stabilizer control means (SC, SA) controlling a torsional force of a stabilizer (STBf. STBr) adapted to be arranged between wheels at right and left of the vehicle;
   a detecting means (S1, S2, XG, YG, YR, ZG, VC) detecting a vehicle state including a vehicle speed and a steering state;
   an integrated vehicle body control model calculation means (IMP) setting a model rotation axis of a vehicle body based on at least the vehicle speed, the steering state and the steering state among detected results by the detecting portion as well as and a specification of the vehicle among detected results by the detecting means (S1, S2, XG, YG, YR, ZG, VC) and calculating an integrated vehicle body control model including a model value having the model rotation axis as a center;
   a first calculating means (C1) calculating a pitch component, a heave component and a roll component when performing feed-forward control on the basis of the integrated vehicle body control model calculated by the integrated vehicle body control model calculation means (IMP);
   a second calculating means (C2) calculating a pitch component, a heave component and a roll component when performing feedback control on the basis of a difference between the vehicle state detected by the detecting means (S1, S2, XG, YG, YR, ZG, VC) and the model value calculated by the integrated vehicle body control model calculation means (IMP);
   a distribution control means (DC) combining the pitch components, the heave components and the roll components calculated by the first calculating means (C1) and the second calculating means (C2), distributing a combined resultant of the pitch components and the heave components for controlling damping force by the shock absorber control means and distributing a combined resultant of the roll components for controlling the torsional force by the stabilizer control means (SC, SA); and
an actuation control means (ECU) controlling actuation of the shock absorber and the stabilizer (STB) in response to a distribution result by the distribution control means (DC).

2. An integrated vehicle body attitude control apparatus, according to Claim 1, further comprising:

a human sensitivity function calculating means (HS) determining a value dividing a difference between the vehicle state detected by the detecting means and the model value calculated by the integrated vehicle body control model calculation means by an absolute value of the model value as a human sensitivity function; wherein the second calculating means calculates the pitch component, the heave component and the roll component when performing the feedback control on the basis of a calculation result by the human sensitivity function calculating means.

3. An integrated vehicle body attitude control apparatus, according to Claim 1, wherein the detecting portion (VC) estimating the vehicle state when a rear wheel of the vehicle passes the subject portion on a road surface on the basis of the vehicle state when a front wheel of the vehicle passes the subject portion on the road surface; and wherein the second calculating means calculates the pitch component, the heave component and the roll component when performing the feedback control on the basis of a difference between the estimated vehicle state and the model value.

4. An integrated vehicle body attitude control apparatus, according to any one of Claims 1-3, wherein, when the combined resultant of the roll component-exceeds a roll component limit which is applicable to a control of torsional force by the stabilizer control means, the distribution control means distributes the excessive roll component to control damping force by the shock absorber control means.

5. An integrated vehicle body attitude control apparatus according to any one of Claims 1-4, wherein the distribution control means compares damping forces of the shock absorbers adapted to be provided at wheels diagonally arranged from each other of the vehicle, and distributes the heave component in response to the result of comparison by the distribution control means.

**Patentansprüche**

1. Integrierte Vorrichtung zur Fahrzeugkarosserieausrichtungssteuerung, mit:

einer Einrichtung zur Stoßdämpfersteuerung (AC, AA) zum Steuern einer Dämpfkraft eines Stoßdämpfers (ASfr, Asfl, ASrr, ASrl), der angepasst ist, um an jedem der Räder eines Fahrzeugs vorgesehen zu sein;
einer Einrichtung zur Stabilisierersteuerung (SC, SA), die eine Torsionskraft eines Stabilisierers (STBf, STBr) steuert, der angepasst ist, um zwischen den Rädern rechts und links von dem Fahrzeug angeordnet zu sein;
einer Erfassungseinrichtung (S1, S2, XG, YG, YR, ZG, VC), die einen Fahrzeugzustand einschließlich einer Fahrzeuggeschwindigkeit und eines Lenkzustands erfasst;
einer integrierten Einrichtung zur Berechnung einer Fahrzeugkarosseriesteuerung (IMP), die eine Modelldrehachse einer Fahrzeugkarosserie zumindest auf der Grundlage der Fahrzeuggeschwindigkeit, des Lenkzustands und des Lenkzustands unter von dem Erfassungsabschnitt erfassten Ergebnissen festsetzt, sowie eine Angabe des Fahrzeugs unter von der Erfassungseinrichtung (S1, S2, XG, YG, YR, ZG, VC) erfassten Ergebnissen und Berechnen eines integrierten Fahrzeugkarosseriesteuerungsmodells einschließlich eines Modellwerts, der die Modelldrehachse als ein Zentrum hat;
einer ersten Berechnungseinrichtung (C1), die eine Steigungskomponente, eine Hebekomponente und eine Rollkomponente berechnet, wenn auf der Grundlage der von der integrierten Einrichtung zur Berechnung eines Fahrzeugkarosseriesteuerungsmodells (IMP) berechneten integrierten Fahrzeugkarosseriesteuerungsmodells eine Vorwärtssteuerung durchgeführt wird;
einer zweiten Berechnungseinrichtung (C2), die eine Steigungskomponente, eine Hebekomponente und eine Rollkomponente berechnet, wenn auf der Grundlage einer Differenz zwischen dem von der Erfassungseinrichtung (S1, S2, XG, YG, YR, ZG, VC) erfassten Fahrzeugzustand und dem von der integrierten Einrichtung zur Berechnung eines Fahrzeugkarosseriesteuerungsmodells (IMP) berechneten Modellwert eine Vorwärtssteuerung durchgeführt wird;
einer Verteilersteuerungseinrichtung (DC), die die Steigungskomponente, die Hebekomponente und die Rollkomponente kombiniert, die von der ersten Berechnungseinrichtung (C1) und der zweiten Berechnungseinrichtung (C2) berechnet sind, ein kombiniertes Ergebnis der Steigungskomponenten und der Hebekomponenten zum Steuern einer Dämpfkraft durch die Einrichtung zur Stoßdämpfersteuerung verteilt, und ein kombiniertes Ergebnis der Rollkomponenten zum Steuern der Torsionskraft durch die Einrichtung zur Stabilisierersteuerung (SC, SA) verteilt; und

einer Einrichtung zur Betätigungssteuerung (ECU), die eine Betätigung des Stoßdämpfers und des Stabilisierers (STB) als Antwort auf ein Verteilerergebnis der Verteilersteuerungseinrichtung (DC) steuert.

2.  Integrierte Vorrichtung zur Fahrzeugkarosserieausrichtungssteuerung nach Anspruch 1, ferner mit:

einer Einrichtung zur Berechnung einer menschlichen Empfindlichkeitsfunktion (HS), die einen Wert bestimmt, indem eine Differenz zwischen dem von der Erfassungseinrichtung erfassten Fahrzeugzustand und dem von der integrierten Einrichtung zur Berechnung eines Fahrzeugkarosseriesteuerungsmodells berechneten Modellwert durch einen absoluten Wert des Modellwerts als eine menschliche Empfindlichkeitsfunktion geteilt wird; wobei

die zweite Berechnungseinrichtung die Steigungskomponente, die Hebekomponente und die Rollkomponente berechnet, wenn die Rückkoppelungsregelung auf der Grundlage eines Berechnungsergebnisses der Einrichtung zur Berechnung einer menschlichen Empfindlichkeitsfunktion durchgeführt wird.

3.  Integrierte Vorrichtung zur Fahrzeugkarosserieausrichtungssteuerung nach Anspruch 1, wobei der Erfassungsabschnitt (VC) den Fahrzeugzustand schätzt, wenn ein hinteres Rad des Fahrzeugs den unterliegenden Abschnitt an einer Straßenfläche überquert auf der Grundlage des Fahrzeugzustands, wenn ein Vorderrad des Fahrzeugs den unterliegenden Abschnitt an der Straßenfläche überquert; und wobei die zweite Berechnungseinrichtung die Steigungskomponente, die Hebekomponente und die Rollkomponente berechnet, wenn die Regelung auf der Grundlage einer Differenz zwischen dem geschätzten Fahrzeugzustand und dem Modellwert durchgeführt wird.

4.  Integrierte Vorrichtung zur Fahrzeugkarosserieausrichtungssteuerung nach einem der Ansprüche 1-3, wobei, wenn das kombinierte Ergebnis der Rollkomponente eine Rollkomponentengrenze, die auf eine Steuerung einer Torsionskraft durch die Einrichtung zur Stabilisierersteuerung anwendbar ist, übersteigt, die Verteilersteuerungseinrichtung die überschüssige Rollkomponente verteilt, um die Dämpfkraft über die Einrichtung zur Stoßdämpfersteuerung zu steuern.

5.  Integrierte Vorrichtung zur Fahrzeugkarosserieausrichtungssteuerung nach einem der Ansprüche 1-4, wobei die Verteilersteuerungseinrichtung Dämpfkräfte der Stoßdämpfer vergleicht, die angepasst sind, um an diagonal über das Fahrzeug voneinander angeordneten Rädern vorgesehen zu sein, und die Hebekomponente als Antwort auf das Ergebnis eines Vergleichs durch die Verteilersteuerungseinrichtung verteilt.

## Revendications

1.  Appareil intégré de commande du comportement de la carrosserie d'un véhicule, comprenant :

un moyen de commande d'amortisseur (AC, AA) pour commander la force d'amortissement d'un amortisseur (ASfr, Asfl, ASrr, ASrl) adapté pour être pourvu à chaque roue du véhicule ;
un moyen de commande de stabilisateur (SC, SA) commandant une force de torsion d'un stabilisateur (STBf, STBr) adapté pour être disposé entre les roues droites et gauches du véhicule ;
un moyen de détection (S1, S2, XG, YG, YR, ZG, VC) détectant l'état du véhicule comprenant la vitesse du véhicule et l'état de direction ;
un moyen (IMP) de calcul du modèle de commande intégré de la carrosserie du véhicule établissant un axe de rotation modèle de la carrosserie du véhicule sur la base d'au moins la vitesse du véhicule, l'état de direction et ainsi que l'état de direction parmi des résultats détectés par la partie de détection et une spécification du véhicule parmi des résultats détectés par le moyen de détection (S1, S2, XG, YG, YR, ZR, ZG, VC) et calculant un modèle de commande intégré de la carrosserie du véhicule comprenant une valeur de modèle dont l'axe de rotation du modèle est le centre ;
un premier moyen de calcul (C1) calculant une composante de tangage, une composante de dérapage et une composante de roulis lors de l'exécution d'une commande directe sur la base du modèle de commande intégré de la carrosserie du véhicule calculé par le moyen (IMP) de calcul du modèle de commande intégré de la carrosserie du véhicule ;
un deuxième moyen de calcul (C2) calculant une composante de tangage, une composante de dérapage et une composante de roulis lors de l'exécution d'une commande par rétroaction sur la base d'une différence entre l'état du véhicule détecté par le moyen de détection (S1, S2, XG, YG, YR, ZG, VC) et la valeur du modèle calculée par le moyen (IMP) de calcul du modèle de commande intégré de la carrosserie du véhicule ;

un moyen de commande de distribution (DC) combinant les composantes de tangage, les composantes de dérapage et les composantes de roulis calculées par le premier moyen de calcul (C1) et par le deuxième moyen de calcul (C2), en distribuant un résultat combiné des composantes de tangage et des composantes de dérapage pour commander la force d'amortissement par le moyen de commande d'amortisseur et pour distribuer un résultat combiné des composantes de roulis pour commander la force de torsion par le moyen de commande du stabilisateur (SC, SA) ; et

un moyen de commande d'actionnement (ECU) commandant l'actionnement de l'amortisseur et du stabilisateur (STB) en réponse à un résultat de distribution par le moyen de commande de distribution (DC).

2. Appareil intégré de commande de comportement d'une carrosserie de véhicule, selon la revendication 1, comprenant en outre :

un moyen (HS) de calcul de la fonction de sensibilité humaine déterminant une valeur divisant une différence entre l'état du véhicule détecté par le moyen de détection et la valeur de modèle calculée par le moyen de calcul du modèle de commande intégré de la carrosserie du véhicule par une valeur absolue de la valeur de modèle comme une fonction de sensibilité humaine ; où

le deuxième moyen de calcul calcule la composante de tangage, la composante de dérapage et la composante de roulis lors de l'exécution de la commande par rétroaction sur la base d'un résultat de calcul par le moyen de calcul de la fonction de sensibilité humaine.

3. Appareil intégré de commande de comportement d'une carrosserie de véhicule, selon la revendication 1, dans lequel la partie de détection (VC) estime l'état du véhicule lorsqu'une roue arrière du véhicule dépasse la partie objet sur une surface de roulement sur la base de l'état du véhicule lorsqu'une roue avant du véhicule dépasse la partie objet sur la surface de roulement ; et dans lequel le deuxième moyen de calcul calcule la composante de tangage, la composante de dérapage et la composante de roulis en exécutant la commande par rétroaction sur la base d'une différence entre l'état de véhicule estimé et la valeur du modèle.

4. Appareil intégré de commande de comportement d'une carrosserie de véhicule, selon l'une quelconque des revendications 1 à 3, dans lequel, lorsque le résultat combiné de la composante de roulis dépasse une limite de composante de roulis qui est applicable à une commande de la force de torsion par le moyen de commande de stabilisateur, le moyen de commande de distribution distribue la composante de roulis excessif pour commander la force d'amortissement par le moyen de commande d'amortisseur.

5. Appareil intégré de commande de comportement d'une carrosserie de véhicule selon l'une quelconque des revendications 1 à 4, dans lequel le moyen de commande de distribution compare les forces d'amortissement des amortisseurs adaptés pour être pourvus aux roues diagonalement disposées du véhicule, et distribue le composant de dérapage en réponse au résultat de comparaison par le moyen de commande de distribution.

FIG. 1



EP 1 985 478 B1

# F I G. 2

16

FIG. 3

```
┌──────────────────────────┐
│ Integrated vehicle body  │
│    attitude control      │
└──────────────────────────┘
              ↓
┌──────────────────────────┐
│      Initialization      │ ⌐ 101
└──────────────────────────┘
              ↓
┌──────────────────────────┐
│  Reading-in sensor/      │ ⌐ 102
│  communication signal    │
└──────────────────────────┘
              ↓
┌──────────────────────────┐
│      Calculating         │ ⌐ 103
│   integrated vehicle     │
│   body control model     │
└──────────────────────────┘
              ↓
┌──────────────────────────┐
│   Calculating pitch,     │ ⌐ 104
│  heave, roll components  │
│  for feed-forward control│
└──────────────────────────┘
              ↓
┌──────────────────────────┐
│   Calculating human      │ ⌐ 105
│   sensitivity function   │
└──────────────────────────┘
              ↓
┌──────────────────────────┐
│   Calculating human      │ ⌐ 106
│ sensitivity variable gain│
└──────────────────────────┘
              ↓
┌──────────────────────────┐
│ Calculating pitch, heave,│ ⌐ 107
│   roll components for    │
│     preview control      │
└──────────────────────────┘
              ↓
┌──────────────────────────┐
│ Calculating distribution │ ⌐ 108
│  of pitch, heave, roll   │
│  components for controls  │
└──────────────────────────┘
              ↓
┌──────────────────────────┐
│  Controlling stabilizer  │ ⌐ 109
│        actuator          │
└──────────────────────────┘
              ↓
┌──────────────────────────┐
│   Controlling absorber   │ ⌐ 110
│        actuator          │
└──────────────────────────┘
```

# FIG. 4

```
      ╭─────────────────────────╮
      │  Integrated vehicle body │
      │  control model calculation│
      ╰─────────────────────────╯
                   │
                   ▼
      ┌─────────────────────────┐
      │  Calculating tire force  │ ─ 201
      └─────────────────────────┘
                   │
                   ▼
      ┌─────────────────────────┐
      │   Setting ideal vehicle  │ ─ 202
      │    body rotation axis    │
      └─────────────────────────┘
                   │
                   ▼
      ┌─────────────────────────┐
      │ Calculating ideal vehicle│ ─ 203
      │   body rotation amount   │
      └─────────────────────────┘
                   │
                   ▼
      ┌─────────────────────────┐
      │    Calculating ideal     │ ─ 204
      │ coordinates of each wheel│
      └─────────────────────────┘
                   │
                   ▼
      ┌─────────────────────────┐
      │ Calculating ideal pitch/ │ ─ 205
      │    roll/heave amount     │
      └─────────────────────────┘
                   │
                   ▼
            ╭─────────────╮
            │   Return    │
            ╰─────────────╯
```

# FIG. 5

# FIG. 6

# FIG. 7

# FIG. 8

# FIG. 9

# FIG. 10

```
                                                    ┌─ AC
        ┌─────────────────────────────────────────────────────────────┐
        │                      Absorber controller                     │
        │        ┌─ AC1                                                 │
        │   ┌──────────────┐                                           │
        │   │  Obtaining   │        ┌─ AC3      ┌─ AC4                  │    ┌─ AA
        │   │  generating  │    ┌──────────┐  ┌──────────┐             │
┌────┐  │   │ force limit by│   │ Limiting │  │Calculating│            │   ┌──────────┐
│Wsxx│  │   │each absorber │    │ control  │  │ damping  │             │   │ Absorber │
└────┘  │   └──────────────┘    │ target of│  │  force   │             │   │ actuator │
  ┌──────────┐                  │  heave   │  │requested │             │   └──────────┘
┌────┐│Vehicle body│  ┌──────────┐│component │  │ to each  │            │
│XG  ││controller  │  │Calculating│└──────────┘│ absorber │            │
└────┘│            │  │ control   │            └──────────┘             │
┌────┐│            │  │distribution of│                                │
│YG  ││            │  │pitch/heave/│                                    │
└────┘│            │  │ roll by each│                                   │
      │            │  │ absorber   │   AC2                              │
┌────┐│            │  └──────────┘                                      │
│ZGxx││            │                                                    │
└────┘└──────────┘  └─────────────────────────────────────────────────┘
                                                                           ┌─ OA
                         ┌──────────────────┐        ┌──────────┐
                         │ Other controllers│        │  Other   │
                         └──────────────────┘        │actuators │
                                    └─ OC             └──────────┘
```

# FIG. 11

```
          ( Damping force control )
                      |
                      v
              ┌─────────────────┐
              │  Initialization │─── 301
              └─────────────────┘
                      |
                      v
          ┌─────────────────────────┐
          │   Reading-in sensor/    │─── 302
          │  communication signal   │
          └─────────────────────────┘
                      |
                      v
          ┌─────────────────────────┐
          │  Calculating requested  │
          │ amount to roll, pitch and│─── 303
          │    heave components     │
          └─────────────────────────┘
                      |
                      v
          ┌─────────────────────────┐
          │   Calculating control   │
          │ distribution of roll/pitch/│─── 304
          │  heave by each absorber │
          └─────────────────────────┘
                      |
                      v
          ┌─────────────────────────┐
          │     Limiting heave      │─── 305
          │   restraining amount    │
          └─────────────────────────┘
                      |
                      v
          ┌─────────────────────────┐
          │ Calculating absorber controlling │─── 306
          │    amount for each wheel │
          └─────────────────────────┘
                      |
                      v
          ┌─────────────────────────┐
          │  Controlling absorber   │─── 307
          │       actuator          │
          └─────────────────────────┘
```

# F I G. 12

Heave restraining amount limitation

Mrp>Mk? — 401

NO

YES

$F'\underline{rh}=G(Mrp) \cdot Frh$ — 402

$Fmax(fr)=Cmax(fr) \cdot Vas(fr)$ — 403

$F'rh>Fmax(fr)?$ — 404

NO

YES

$Fth(fr)=Fmax(fr)$ — 405

$Fth(rl)=Fmax(fr)$ — 406

Return

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001001736 A
- JP 2006347406 A
- US 20030045978 A
- DE 102004055177 A
- US 20070088475 A
- JP 07032837 A
- US 5500798 A